# FASCICULE DE BREVET EUROPEEN

(11) **EP 0 756 097 B1**
(45) Date de publication et mention de la délivrance du brevet: **19.12.2001**
(21) Numéro de dépôt: 96111913.8
(22) Date de dépôt: 24.07.1996
(51) Int. Cl.: F16D 13/64

(54) **Disque de friction d'embrayage, notamment pour véhicule automobile**
Reibungskupplungsscheibe, insbesondere für Kraftfahrzeuge
Clutch friction disk, especially for an automotive vehicle

(30) Priorité: 28.07.1995 FR 9509447
(43) Date de publication de la demande: 29.01.1997
(73) Titulaire: VALEO, 75017 Paris (FR)
(72) Inventeur: Chevallier, Gisèle, 87270 Bonnac la Cote (FR)
(74) Mandataire: Lemaire, Marc

(56) Documents cités:
- WO-A-94/19616
- WO-A-95/13485
- FR-A- 1 017 688
- FR-A- 2 714 432

## Description

La présente invention concerne les frictions d'embrayages, notamment pour véhicule automobile, du type comportant un disque de friction comprenant, d'une part, deux garnitures de friction chacune adhérisée ou surmoulée sur la face externe de la partie périphérique d'un support, qui se prolonge radialement vers l'intérieur par une partie centrale de fixation et, d'autre part, un élément de progressivité en matière élastique formant ressort, qui est interposé entre les faces internes en vis-à-vis des parties périphériques des deux supports, et qui est fixé à au moins un des deux supports, dans lequel au moins un élément formant cale est interposé entre les faces internes des parties centrales de fixation en étant fixé à celles-ci.

Une telle friction est décrite dans le document FR-A-2 714 432 déposé le 23 décembre 1993.

Cette disposition donné satisfaction car elle permet de réduire l'inertie de la friction, grâce au mode de fixation des garnitures de friction permettant de réduire l'épaisseur de celles-ci, tout en ayant une bonne progressivité lors du serrage des garnitures de friction entre les plateaux de pression et de réaction de l'embrayage au sein duquel intervient la friction d'embrayage.

En outre les supports peuvent avoir une forme plane en étant de faible épaisseur attendu que chacun d'entre eux ne transmet que la moitié du couple.

Dans le document précité on insère l'élément formant cale par exemple avant la fixation de l'élément de progressivité.

A la lumière du document FR-A-2 673 984, on voit que cela complique l'élaboration du disque de friction dans un moule.

En outre après on se retrouve en présence d'un sous-ensemble comprenant le disque de friction et son élément cale, ce qui complique ultérieurement le montage de ce sous-ensemble avec les autres constituants de la friction d'embrayage. De plus cela pose des problèmes de manipulation, de transport et de stockage de ce sous-ensemble, l'élément formant cale risquant d'endommager l'élément de progressivité.

La présente invention a pour objet de pallier, et ce de manière simple et économique, ces inconvénients.

Suivant l'invention une friction d'embrayage du type sus-indiqué est caractérisée en ce que le disque de friction forme par avance un sous-ensemble unitaire, et en ce que des moyens de montage du type baïonnette interviennent entre l'une des parties centrales de fixation d'un des supports et l'élément formant cale.

Grâce à l'invention on peut fabriquer, lors d'une première étape, de manière simple et économique, le disque de friction puis après le monter sur son élément formant cale.

Ainsi le moule d'élaboration du disque de friction est simplifié et les temps de fabrication réduits car il n'y a pas à stocker et à manipuler l'élément formant cale à ce stade.

On peut ainsi augmenter les cadences de fabrication.

En outre on peut tester et/ou contrôler de manière simple le disque de friction.

De plus si désiré, on peut roder aisément les garnitures de friction.

On notera également que l'on peut stocker, manipuler et transporter le disque de friction en l'absence de l'élément formant cale, en sorte que l'élément de progressivité a moins de risques d'être endommagé.

Dans une autre étape, par exemple dans un autre lieu de fabrication, on peut assembler les autres composants de la friction d'embrayage sans avoir à manipuler le disque de friction.

Ainsi cela permet de réduire le temps d'immobilisation des machines et de simplifier l'assemblage des divers constituants.

Enfin on assemble en final, dans un troisième lieu de fabrication si désiré, le disque de friction avec son élément formant cale avantageusement déjà assemblés avec les autres constituants de la friction d'embrayage.

On notera que l'on peut également faire un contrôle lors de la deuxième étape.

Tout cela permet l'obtention d'une friction d'embrayage de grande qualité tout en diminuant le nombre de pièces à mettre au rebut.

Les moyens de montage baïonnette font appel à des moyens de passage, tels que des échancrures, pratiqués dans le support concerné et à des pattes saillantes radialement vers l'extérieur ménagées dans l'élément formant cale.

Bien entendu l'autre support peut être également doté de moyens de passage, mais de préférence un seul des supports comporte lesdits moyens de passage.

Ainsi on engage axialement les pattes dans les moyens de passage ou vice versa et ce aisément car l'autre support limite automatiquement ce mouvement axial relatif, puis on effectue une rotation du disque de friction par rapport à son élément formant cale ou vice versa et enfin on procède à la fixation par exemple par rivetage, boulonnage ou soudage du disque de friction avec son élément formant cale.

Bien entendu l'autre support peut être également doté de moyens de passage mais ceux-ci ont alors avantageusement une taille inférieure à celle des pattes pour un montage simplifié.

On appréciera qu'également l'absence de l'élément formant cale, lors de la première étape précitée, permet de ménager l'élément de progressivité du fait notamment de l'allégement dû à l'absence dudit élément. Cela permet également de prendre moins de précautions pour manipuler et transporter le disque de friction formant, suite à cette étape, un ensemble unitaire manipulable et transportable avec diminution des risques de détériorations.

Tout cela est bénéfique notamment lorsque l'élément de progressivité est du type cellulaire comme dans le document FR-A-2 673 984 ou consister en une pluralité de protubérances comme dans le document US-A-5,076,409.

En outre on diminue au total les risques d'erreurs en ce qui concerne le bon choix des divers constituants stockés du fait de la possibilité de former plusieurs sous-ensembles contrôlables et testables séparément.

On appréciera que l'élément formant cale peut être continu ou consister en une pluralité de pattes selon les diverses applications et par exemple selon que l'élément cale consiste en une rondelle de guidage ou en un voile que comporte usuellement la friction d'embrayage, ou en variante qu'il est accolé à ladite rondelle de guidage ou au voile.

On appréciera que l'on a de nombreuses manières grâce à l'invention de fabriquer la friction d'embrayage.

Enfin les moyens de montage baïonnette sont de nature à favoriser la ventilation et la souplesse du disque de friction tout en conservant une bonne robustesse. Pour cette raison il est avantageux que les pattes soient allongées circonférentiellement et que l'un des supports soit dépourvu de moyens de passage.

D'autres caractéristiques et avantages de l'invention apparaîtront à la lecture de la description détaillée qui va suivre pour la compréhension de laquelle on se reportera aux dessins annexés dans lesquels :
- la figure 1 est une vue partielle en coupe d'un disque de friction ;
- la figure 2 est une demi-vue en coupe dune friction d'embrayage non équipée de son disque de friction ;
- la figure 3 est une vue analogue à la figure 2 pour un autre mode de réalisation ;
- la figure 4 est une vue partielle en coupe axiale du disque de friction monté sur son élément cale ;
- la figure 5 est une vue de face montrant les moyens de montage baïonnette selon l'invention ;
- la figure 6 est une vue de face partielle montrant le disque de friction selon un autre mode de réalisation ;
- la figure 7 est une vue de face partielle montrant un élément formant cale apte à coopérer avec le disque de friction selon la figure 6.

Le disque de friction 10, illustré dans les figures, appartient à une friction d'embrayage pour véhicule automobile et forme l'élément d'entrée de celle-ci.

Ainsi qu'on le sait une friction d'embrayage comporte un élément de sortie 1, sous forme d'un moyeu cannelé intérieurement, pour liaison en rotation de la friction d'embrayage avec l'arbre d'entrée de la boîte de vitesses.

Cette friction comporte en outre deux rondelles de guidage 51,52 disposées de part et d'autre d'un voile 50, les rondelles 51,52 et le voile 50 entourant le moyeu 1.

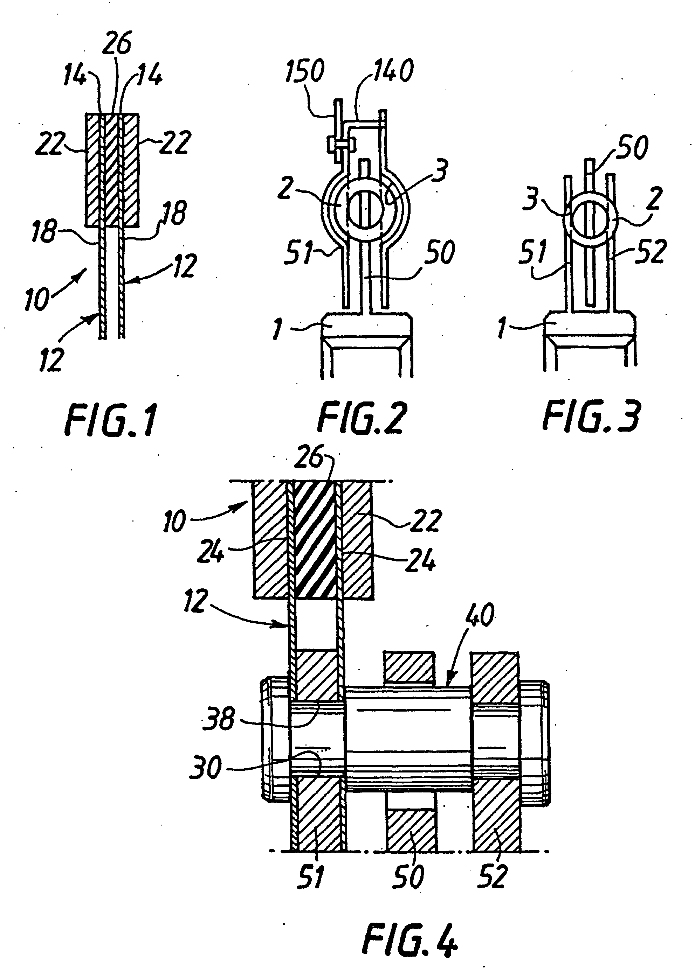

Dans un mode de réalisation (figures 2,4) les rondelles de guidage 51,52 sont solidaires du disque de friction 10 et entourent librement le moyeu 1, tandis que le voile 50 est solidaire en rotation du moyeu 1, éventuellement après rattrapage du jeu circonférentiel déterminé par des moyens d'engrènement à jeu.

Dans un autre mode de réalisation (figure 3) les structures sont inversées en sorte que les rondelles de guidage 51,52 sont solidaires du moyeu 1, tandis que le voile 50 entoure librement le moyeu 1 et est solidaire du disque de friction 10.

Dans tous les cas des organes élastiques 2 à action circonférentielle, usuellement des ressorts à boudin, en variante des blocs en matière élastique tels que de l'élastomère en association avec des ressorts à boudin, sont montés dans des logements 3 pratiqués en vis-à-vis dans les rondelles de guidage 51,52 et dans le voile 50.

Ces organes 2, le plus souvent d'action étagée, accouplent élastiquement l'élément d'entrée 10 à l'élément de sortie 1.

Dans le premier mode de réalisation précité des entretoises 40,140 relient entre elles à solidarisation les rondelles de guidage 51,52.

Ces entretoises peuvent consister en des colonnettes de fixation 40 traversant à jeu circonférentiel le voile 50 ce qui permet de limiter le débattement angulaire entre le voile 50 et les rondelles 51,52.

Dans ce cas on profite des colonnettes 40 pour fixer également le disque 10.

En variante les entretoises peuvent consister en un rebord radial annulaire d'orientation axiale 140 que présente par exemple la rondelle de guidage 51 à sa périphérie externe, ledit rebord étant doté de mortaises dans lesquelles sont propres à pénétrer des tenons appartenant à l'autre rondelle de guidage, l'assemblage étant fait par sertissage au niveau des bords des mortaises conduisant un fluage de matière pour empiétement sur lesdits tenons comme décrit par exemple dans le document FR-A-2 411 999.

On notera que les logements 3 peuvent consister en des fenêtres (figure 3) ou en des emboutis (figure 2).

Le disque de friction 10 est constitué pour l'essentiel par deux supports parallèles 12, dont chacun est réalisé par découpage d'une tôle mince. Chaque support 12, ici métallique de forme plane, comporte une partie périphérique 14, agencée radialement à l'extérieur, de forme générale annulaire continue, et une partie centrale de fixation 18, qui s'étend radialement vers l'intérieur.

Bien entendu, il peut être également prévu que la partie périphérique annulaire du support 12 soit de forme discontinue, en présentant une multiplicité de découpes radiales permettant ainsi la formation de languettes successives radiales.

Les deux supports 12 ont un axe commun et chacun sert de support à une garniture en matériau de friction 22.

S'agissant dune friction d'embrayage, ces garnitures 22, de manière connue, sont propres à être serrées entre les plateaux de pression et de réaction de l'embrayage, tandis que le moyeu est propre à être lié en rotation, de manière précitée, avec l'arbre d'entrée de la boite de vitesses.

Chaque garniture de friction 22 est fixée par adhérisation, par exemple collage, brasage, ou par surmoulage sur la portion annulaire en vis-à-vis de la face extérieure 24 des deux supports 12(figure 4).

Selon une technique connue, un anneau continu 26 en matière élastique formant ressort est interposé entre les faces internes en vis-à-vis des supports 12 dans leur zone périphérique en regard des garnitures annulaires et coaxiales de friction 22.

Sans sortir du cadre de l'invention, il peut être également prévu que l'anneau 26 soit discontinu par exemple sous la forme de plots distincts disposés entre les faces internes en vis-à-vis des supports 12.

Cet anneau peut être réalisé en matériau cellulaire possédant des cellules ou alvéoles ouvertes et/ou fermées qui permettent, sous l'effet de contraintes de compressions, de provoquer la diminution d'épaisseur du matériau, et, lorsque cessent de telles contraintes, de provoquer un retour à l'épaisseur d'origine.

Cet anneau peut être formé à partir des matériaux appartenant au groupe comprenant les mousses d'élastomère.

Pour plus de précisions on se reportera au document FR-A-2 673 984 précité.

En variante il peut s'agir comme dans le document US-A-5,076,409 d'une pluralité de protubérances en matière élastique.

Dans les deux cas l'anneau 26 ou les protubérances en matière élastique, telles que de l'élastomère, sont fixées par adhérisation, par exemple collage, ou vulcanisation in situ, aux faces internes en vis-à-vis des supports 12.

Bien entendu certaines protubérances peuvent n'être fixées qu'à l'un des supports comme décrit dans le document US-A-5,076,409.

A la figure 4 des trous alignés 30 sont formés dans les supports 12, dans leur partie centrale de fixation 18, pour permettre le passage d'organes de serrage des supports 12 et de fixation du disque 10 tels que les colonnettes 40 ou des rivets.

Ici, suivant une caractéristique de l'invention, il est formé par avance un sous-ensemble unitaire formé par le disque de friction 10.

Pour la fabrication de cet ensemble unitaire on se reportera par exemple au document FR-A-2 673 984 et particulièrement à la figure 3 de celui-ci montrant le moule.

Ce disque de friction 10 est destiné à être monté sur un élément formant cale. Cet élément est donc destiné à être interposé entre les faces internes des parties centrales de fixation 18 en étant fixé à celles-ci.

Plus précisément, selon une caractéristique de l'invention, des moyens de montage baïonnette 9 interviennent entre l'une des parties centrales de fixation 18 d'un des supports 12 et l'élément formant cale.

Dans le mode de réalisation de la figure 4 l'élément formant cale est formé par la rondelle de guidage 51 entourant à jeu le moyeu 1 et est ici déjà assemblé avec les autres constituants de la friction.

Cette rondelle de guidage 51 présente des logements 3 en forme d'embouti. Dans cette réalisation la rondelle de guidage 51 présente à sa périphérie externe radialement en saillie vers l'extérieur des pattes 60 allongées circonférentiellement. Ces pattes 60 alternent circonférentiellement avec des échancrures 61.

Le support 12, ici celui qui est destiné à être le plus proche du voile 50 après montage, présente à sa périphérie interne des moyens de passage en forme d'échancrures 71.

Ces échancrures 71, ouvertes radialement vers l'intérieur, alternent circonférentiellement avec des pattes 70 dirigées radialement vers l'axe de l'ensemble.

On notera que dans l'exemple de réalisation décrit les échancrures 71 et les pattes 60 sont complémentaires et qu'il en est de même des pattes 70 et des échancrures 61.

Les pattes 70 et 60 sont dotées d'au moins un trou 30, ici deux trous 30, destiné à être alignés après montage.

L'autre support 12, le plus éloigné du voile 50, est dépourvu de moyens de passage en sorte qu'il est continu.

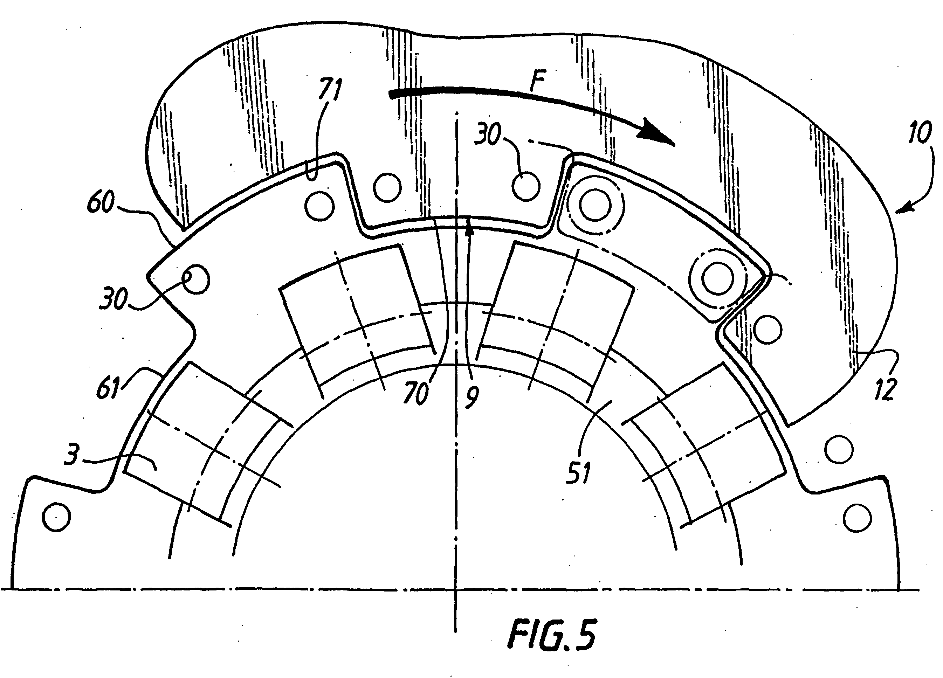

Ainsi qu'on l'aura compris, on engage axialement les pattes 60 dans les échancrures 71 ou vice versa puis on effectue une rotation selon la flèche F (figure 5) de l'élément formant cale 51 par rapport au support 12 pour amener les pattes 60,70 en coïncidence ainsi que les trous 30, l'écart entre deux trous 30 étant bien entendu le même pour deux pattes 60,70 qui sont ici à l'image l'une de l'autre en étant montées tête-bêche.

Après cette rotation on effectue la solidarisation grâce aux colonnettes 40 reliant entre elles les deux rondelles de guidage 51,52 en traversant pour ce faire le voile 50.

De manière préférentielle, le disque de friction 10 peut être constitué de deux supports 12 identiques.

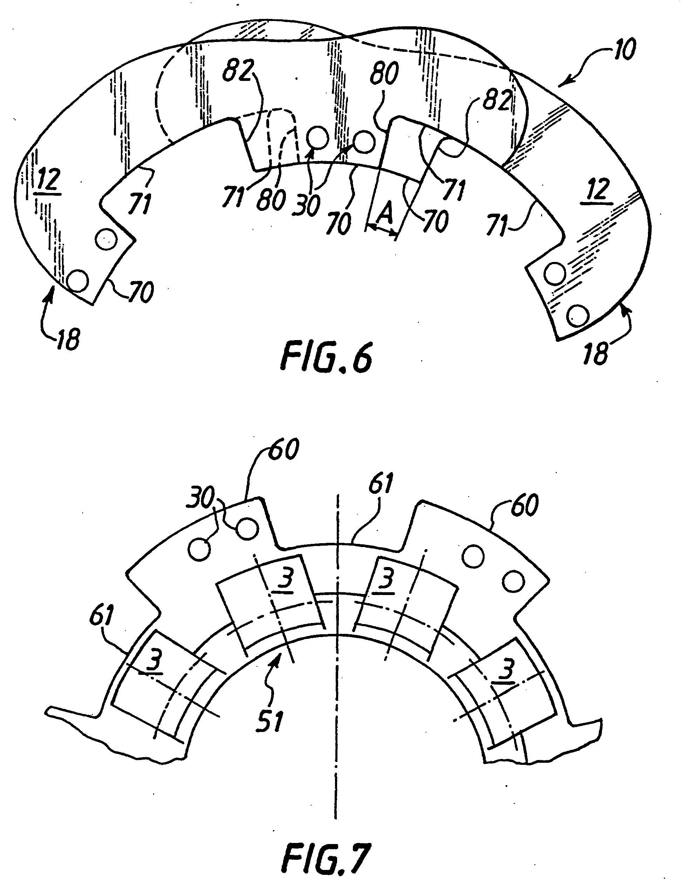

Comme mieux visible sur la figure 6, chaque support 12 comporte, au niveau de la partie centrale de fixation 18, une suite d'échancrures 71 et de pattes 70 telles que définies précédemment.

Les pattes 70 portent deux trous 30 permettant le passage d'organes de serrage et de fixation du disque 10.

Comme mieux visible sur cette figure, l'un des trous 30 est disposé à proximité d'un des bords verticaux de la patte 30 alors que l'autre des trous 30 est disposé à distance de l'autre bord vertical 82 de la patte 70.

Pour réaliser le sous-ensemble constitué par le disque de friction 10, il est prévu de décaler angulairement l'un des supports 12 par rapport à l'autre des supports 12 et, de manière préférentielle, de les monter en opposition de manière à ce que le bord 80 de la patte 70 de l'un des supports se trouve à distance angulaire A du bord 82 en vis-à-vis de la patte de l'autre des supports 12 et à ce que les trous 30 disposés sur l'un des supports 12 se trouvent en correspondance avec les trous 30 prévus sur l'autre des supports 12.

Grâce à cette disposition en opposition, il est clair que l'on standardise la fabrication des supports 12.

La disposition en opposition consiste à disposer l'un des supports 12 en vis-à-vis de l'autre des supports après lui avoir fait subir une rotation de 180° autour d'un axe diamétral pour arriver à la configuration décrite ci-dessus en relation avec la figuré 6.

En se référant maintenant à la figure 7, l'élément formant cale 51 est sensiblement identique à celui décrit en relation avec la figure 5 à l'exception de la position des trous 30.

Les pattes 60 de l'élément formant cale, ici la rondelle de guidage 51, comportent des trous 30 de disposition sensiblement identique à celle des trous 30 disposés sur le support 12.

Plus précisément l'un des trous 30 est disposé au voisinage de l'un des bords verticaux de la patte 60 alors que l'autre des trous 30 est disposé à distance de l'autre des bords verticaux; l'écartement entre les deux trous étant égal à l'écartement entre les deux trous 30 prévus sur les supports 12.

Pour le montage, qui sera sensiblement identique à celui décrit précédemment, l'on engagera les pattes 60 dans les échancrures 71 ou vice versa, puis on effectuera une rotation suivant le sens horaire, de façon à ce que les trous 30 de l'élément formant cale 51 coïncident avec les trous 30 portés par les supports 12.

Dans cette disposition, la patte 60 sera masquée par la patte 70 de l'un des supports et prenant appui sur une portion de la patte 70 disposée sur l'autre des supports 12.

Bien entendu la présente invention n'est pas limitée à l'exemple de réalisation décrit. En particulier l'élément formant cale peut être constitué par le voile 50 de la figure 3.

En variante l'élément formant cale 150 peut être accolé à la rondelle de guidage 51 en étant fixé à celle-ci à l'aide de rivets spécifiques (figure 2).

Dans ce cas l'élément 150 peut être en forme de couronne crénelée à sa périphérie externe ou en variante consister en une multitude de pattes fixées sur la rondelle de guidage 51.

Dans ce cas le support 12 présente des échancrures et des pattes 70 comme à la figure 5. Ce support peut être constitué par n'importe lequel des deux supports car dans ce cas l'élément 150 s'étend radialement au-dessus de l'entretoise 140.

Dans ce cas la fixation du disque à son élément formant cale est réalisée à l'aide de rivets.

Bien entendu en variante l'élément cale peut consister en un voile 50 solidaire du moyeu 1, la friction d'embrayage étant dans ce cas rigide et dépourvue de ressort et de rondelle de guidage.

En variante par exemple les pattes 60 peuvent avoir une forme pénétrante et le support 12 des pattes pour guider l'introduction des pattes de l'élément formant cale.

Il peut être envisagé, en outre, que l'épaisseur de l'élément formant cale 51 présente une différence d'épaisseur au niveau des pattes par rapport au reste de cet élément.

En effet, il peut être prévu que les pattes 60 soient de moindre dimension axiale que le reste de l'élément formant cale 51 ou de plus grande dimension que le reste dudit élément selon que l'on monte le sous-ensemble sur le voile ou sur la rondelle de guidage comme mentionné ci-dessus.

Ainsi qu'on l'aura compris l'anneau 26 ou les protubérances constitue un élément de progressivité en matière élastique formant ressort qui est destiné à être écrasé progressivement.

Cet élément 26 peut s'étendre radialement plus vers l'intérieur par rapport aux garnitures de friction 22.

Bien entendu au lieu d'une fixation par colonnette ou rivet, on peut procéder à une fixation par soudage ou par boulonnage.

Dans tous les cas l'élément formant cale est interposé entre les faces internes des parties centrales de fixation 18 en étant fixé à celles-ci.

## Revendications

1. Friction d'embrayage, notamment pour véhicule automobile, du type comportant un disque de friction (10) comprenant, dune part, deux garnitures de friction (22) chacune adhérisée ou surmoulée sur la face externe (24) de la partie périphérique d'un support (12), qui se prolonge radialement vers l'intérieur par une partie centrale de fixation (18) et, d'autre part, un élément de progressivité (26) en matière élastique formant ressort, qui est interposé entre les faces internes en vis-à-vis des parties périphériques des deux supports (12), et qui est fixé à au moins un des deux supports (12), dans lequel au moins un élément formant cale (51,52-50-150) est interposé entre les faces internes des parties centrales de fixation (18) en étant fixé à celles-ci, **caractérisée en ce que** le disque de friction (10) forme par avance un sous-ensemble unitaire, et **en ce que** des moyens de montage du type baïonnette (9) interviennent entre l'une des parties centrales de fixation (18) d'un des supports (12) et l'élément formant cale (51,52-50-150).

2. Friction selon la revendication 1, **caractérisée en ce que** l'élément formant cale (51,52-50-150) présente en saillie radiale à sa périphérie externe des pattes (60) appartenant aux moyens de montage du type baïonnette (9).

3. Friction selon la revendication 2, **caractérisée en ce que** lesdites pattes (60) sont allongées circonférentiellement.

4. Friction selon Tune quelconque des revendications 1 à 3, **caractérisée en ce que** l'un au moins des supports (12) présente des moyens de passage (71).

5. Friction selon la revendication 4, **caractérisée en ce que** lesdits moyens de passage consistent en des échancrures (71) ouvertes vers l'intérieur.

6. Friction selon l'une quelconque des revendications 1 à 5, **caractérisée en ce que** l'élément formant cale (51,52-50) est continu et comporte une alternance de pattes (60) et d'échancrures (61).

7. Friction selon la revendication 6 et la revendication 5 prises conjointement, **caractérisée en ce que** le support (12) comporte une alternance d'échancrures (71) et de pattes (70) complémentaires à celles de l'élément formant cale (51,52-50).

8. Friction selon l'une quelconque des revendications 1 à 5, **caractérisée en ce que** ledit élément formant cale (150) est discontinu et consiste en une pluralité de pattes allongées circonférentiellement.

9. Friction selon la revendication 7, **caractérisée en ce que** chaque support (12) comporte une alternance d'échancrures (71) et de pattes (70) complémentaires à celles de l'élément formant cale (51,52-50-150) et **en ce que** l'un des supports (12) est décalé angulairement par rapport à l'autre des supports.

10. Friction selon la revendication 9, **caractérisée en ce que** les supports (12) sont disposés en opposition l'un par rapport à l'autre.

11. Friction selon la revendication 2, 6 ou 8, **caractérisée en ce que** les pattes (60) présentent une épaisseur axiale différente de celle du reste de l'élément formant cale (51,52-50-150).

## Patentansprüche

1. Reibungskupplungsscheibe, insbesondere für Kraftfahrzeuge, mit einer Reibscheibe (10), die einerseits zwei Reibbeläge (22), die jeweils durch Haftverbindung auf der Außenfläche (24) des Umfangsteils eines Trägers (12) angebracht oder darauf aufgeformt sind, der radial nach innen durch einen mittleren Befestigungsteil (18) verlängert wird, und andererseits ein als Feder dienendes Progressivitätselement (26) aus elastischem Material umfaßt, das zwischen den gegenüberliegenden Innenflächen der Umfangsteile der zwei Träger (12) eingefügt ist und das an wenigstens einem der zwei Träger (12) befestigt ist, wobei wenigstens ein als Paßstück dienendes Element (51, 52-50-150) zwischen den Innenflächen der mittleren Befestigungsteile (18) eingefügt und an diesen befestigt ist,
**dadurch gekennzeichnet,**
**daß** die Reibscheibe (10) im vorhinein eine einheitliche Untergruppe bildet und daß zwischen einem der mittleren Befestigungsteile (18) eines der Träger (12) und dem als Paßstück dienenden Element (51, 52-50-150) Bajonettmontagemittel (9) zum Einsatz kommen.

2. Reibungskupplungsscheibe nach Anspruch 1, **dadurch gekennzeichnet, daß** das als Paßstück dienende Element (51, 52-50-150) an seinem äußeren Umfang radial vorstehende Ansätze (60) aufweist, die zu den Bajonettmontagemitteln (9) gehören.

3. Reibungskupplungsscheibe nach Anspruch 2, **dadurch gekennzeichnet, daß** die besagten Ansätze (60) in Umfangsrichtung langgestreckt sind.

4. Reibungskupplungsscheibe nach einem der Ansprüche 1 bis 3, **dadurch gekennzeichnet, daß** wenigstens einer der Träger (12) Durchgangsmittel (71) aufweist.

5. Reibungskupplungsscheibe nach Anspruch 4, **dadurch gekennzeichnet, daß** die besagten Durchgangsmittel aus nach innen offenen Aussparungen (71) bestehen.

6. Reibungskupplungsscheibe nach einem der Ansprüche 1 bis 5, **dadurch gekennzeichnet, daß** das als Paßstück dienende Element (51, 52-50) durchgehend ausgeführt ist und eine abwechselnde Folge von Ansätzen (60) und Aussparungen (61) umfaßt.

7. Reibungskupplungsscheibe nach Anspruch 6 in Kombination mit Anspruch 5, **dadurch gekennzeichnet, daß** der Träger (12) eine abwechselnde Folge von Aussparungen (71) und Ansätzen (70) formschlüssig mit denjenigen des als Paßstück dienenden Elements (51, 52-50) aufweist.

8. Reibungskupplungsscheibe nach einem der Ansprüche 1 bis 5, **dadurch gekennzeichnet, daß** das besagte als Paßstück dienende Element (150) unterbrochen ist und eine Mehrzahl von umfangsmäßig langgestreckten Ansätzen umfaßt.

9. Reibungskupplungsscheibe nach Anspruch 7, **dadurch gekennzeichnet, daß** jeder Träger (12) eine abwechselnde Folge von Aussparungen (71) und Ansätzen (70) formschlüssig mit denjenigen des als Paßstück dienenden Elements (51, 52-50-150) umfaßt und daß einer der Träger (12) im Verhältnis zu dem anderen der Träger winklig versetzt ist.

10. Reibungskupplungsscheibe nach Anspruch 9, **dadurch gekennzeichnet, daß** die Träger (12) entgegengesetzt zueinander angeordnet sind.

11. Reibungskupplungsscheibe nach Anspruch 2, 6 oder 8, **dadurch gekennzeichnet, daß** die Ansätze (60) eine axiale Dicke aufweisen, die von derjenigen des Rests des als Paßstück dienenden Elements (51,52-50-150) verschieden ist.

## Claims

1. A clutch friction wheel, especially for a motor vehicle, of the type comprising a friction disc (10) which includes, firstly, two friction liners (22), each of which is adhesively bonded or moulded in place on the outer face (24) of the peripheral part of a support member (12), which is extended radially inwards by a central fastening portion (18), and, secondly, a progressive engagement element (26) of resilient material, constituting a spring, which is interposed between the mutually-facing inner faces of the peripheral portions of the two support members (12) and which is fixed to at least one of the two support members (12), wherein at least one locating element (51, 52-50-150) is interposed between the inner faces of the central fastening portions (18), being fixed to these latter, **characterised in that** the friction disc (10) constitutes a pre-formed unitary sub-assembly, and **in that** bayonet-type mounting means (9) are interposed between one of the central fastening portions (18) of one of the support members (12) and the locating element (51, 52-50-150).

2. A friction wheel according to Claim 1, **characterised in that** the locating element (51, 52-50-150) has, projecting from its outer periphery, radial lugs (60) which are part of the bayonet-type mounting means (9).

3. A friction wheel according to Claim 2, **characterised in that** the said lugs (60) extend lengthwise in the circumferential direction.

4. A friction wheel according to any one of Claims 1 to 3, **characterised in that** at least one of the support members (12) includes passage means (71).

5. A friction wheel according to Claim 4, **characterised in that** the said passage means consist of notches (71) open inwards.

6. A friction wheel according to any one of Claims 1 to 5, **characterised in that** the locating element (51, 52-50) is continuous and has lugs (60) arranged alternately with notches (61).

7. A friction wheel according to Claim 6 and Claim 5 taken together, **characterised in that** the support member (12) has notches (71) arranged alternately with lugs (70) complementary to those of the locating element (51, 52-50).

8. A friction wheel according to any one of Claims 1 to 5, **characterised in that** the said locating element (150) is discontinuous and consists of a plurality of lugs extending lengthwise in the circumferential direction.

9. A friction wheel according to Claim 7, **characterised in that** each support member (12) has notches (71) arranged alternately with lugs (70) complementary to those of the locating element (51, 52-50-150), and **in that** one of the support members is offset circumferentially from the other support member.

10. A friction wheel according to Claim 9, **characterised in that** the support members (12) are disposed in opposition to each other.

11. A friction wheel according to Claim 2, 6 or 8, **characterised in that** the lugs (60) have an axial thickness which is different from that of the remainder of the locating element (51, 52-50-150).
